# EUROPÄISCHE PATENTANMELDUNG

(11) **EP 4 647 329 A1**
(43) Veröffentlichungstag der Anmeldung: **12.11.2025**
(21) Anmeldenummer: 25172520.6
(22) Anmeldetag: 25.04.2025
(51) Int. Cl.: B62K 25/30, B62J 13/02

(54) **KETTENKASTEN FÜR EIN FAHRRAD, INSBESONDERE FÜR EIN ZUMINDEST HINTERRADGEFEDERTES FAHRRAD, UND FAHRRAD**

(30) Priorität: 07.05.2024 DE 202024102352 U
(71) Anmelder: Kalkhoff Werke GmbH, 49685 Emstek (DE)
(72) Erfinder: ZERHUSEN, Thomas, 49393 Lohne (DE)
(74) Vertreter: Jabbusch, Matthias

(57) **Zusammenfassung**

Bei einem Kettenkasten für ein Fahrrad, insbesondere für ein zumindest hinterradgefedertes Fahrrad, vorzugsweise für ein vollgefedertes Fahrrad, mit einem zumindest abschnittsweise dem Verlauf einer Antriebskette des Fahrrades folgenden Kastenkörper ist vorgesehen, dass der Kastenkörper aus zumindest zwei Teilkörpern ausgebildet ist, die voneinander unabhängig jeweils am Fahrrad befestigt sind.

Dieser Kettenkasten ist für ein Fahrrad mit einem gefederten Hinterrad geeignet.

## Beschreibung

Die Erfindung betrifft einen Kettenkasten für ein Fahrrad, insbesondere für ein zumindest hinterradgefedertes Fahrrad, vorzugsweise für ein vollgefedertes Fahrrad, mit einem zumindest abschnittsweise dem Verlauf einer Antriebskette des Fahrrades folgenden Kastenkörper. Die Erfindung betrifft des Weiteren ein Fahrrad.

Fahrräder werden seit Jahrzehnten mit Antriebsketten betrieben, und mit diesen Antriebsketten werden die Kräfte von einem Tretlager auf die Achse eines angetriebenen Rades übertragen, regelmäßig auf die Achse des Hinterrades. Unter Antriebsketten werden dabei tatsächlich aus einzelnen Gliedern zusammengesetzte Ketten verstanden, aber auch Zahnriemen oder andere strangförmige Antriebselemente.

Seit Jahrzehnten besteht zudem die Problematik, an gut gefetteten oder verschmutzten Antriebsketten nicht insbesondere Hosenbeine zu beschmutzen. Daher sind gattungsgemäße Kettenkästen gleichfalls lange bekannt.

Dass Fahrräder mit Federungen ausgestattet werden, ist eine jüngere Entwicklung. Neben einer gefederten Gabel für das Vorderrad werden auch über Federn und Dämpfer abgestützte und angelenkte Schwingen für das Hinterrad eingesetzt. Derartig vollgefederte Fahrräder waren zunächst für Mountainbikes und für den Einsatz im Gelände vorgesehen. Diese Fahrräder sind regelmäßig ohne Schutzbleche oder nur mit rudimentären Schutzblechen und auch ohne Kettenkästen ausgerüstet.

Jüngere Entwicklungen haben dazu geführt, dass derartig vollgefederte Räder auch für eine komfortbetonte Benutzung auf öffentlichen Wegen und Straßen eingesetzt werden. In diesem Fall sind die Fahrräder mit Schutzblechen und auch mit einem Kettenkasten ausgerüstet, damit bei der Benutzung dieser Fahrräder keine Beschmutzung der Kleidungsstücke eintritt.

Bekannte Kettenkästen werden am Fahrrad ortsfest befestigt. Bei einem vollgefederten Fahrrad oder auch bei einem nur hinterradgefederten Fahrrad kann das Hinterrad mit der Schwinge mehr oder weniger weit ein- oder ausgefedert werden. Im Zustand insbesondere einer Ausfederung entfernt sich die Antriebskette vom ortsfest angeordneten Kettenkasten, der regelmäßig das obere Trumm der Antriebskette abdecken soll. Diese Abdeckung ist dann nicht mehr gegeben.

Der Erfindung liegt die Aufgabe zugrunde, einen Kettenkasten für ein Fahrrad aufzuzeigen, der für ein Fahrrad mit einem gefederten Hinterrad geeignet ist. Darüber hinaus soll auch ein Fahrrad aufgezeigt werden.

Hinsichtlich des Kettenkastens für ein Fahrrad ist diese Aufgabe erfindungsgemäß dadurch gelöst, dass der Kastenkörper des Kettenkastens aus zumindest zwei Teilkörpern ausgebildet ist, die voneinander unabhängig jeweils am Fahrrad befestigbar sind.

Bei dem erfindungsgemäßen Kettenkasten liegt also eine Teilung in Teilkörper vor. Diese Teilkörper können wie bekannt dem Verlauf der Antriebskette des Fahrrades zugeordnet werden, dabei können sie erfindungsgemäß voneinander unabhängig am Fahrrad befestigt werden. Die Befestigung am Fahrrad kann an voneinander verschiedenen Abschnitten z.B. an Bauteilen eines Fahrradrahmens erfolgen. Werden diese Abschnitte dann aufgrund einer Ein- oder Ausfederung insbesondere des Hinterrades zueinander bewegt, werden die Teilkörper des Kastenkörper ist gleichfalls zueinander bewegt. Dadurch ist sichergestellt, dass der Antriebskette die Teilkörper des Kastenkörpers folgen können, auch wenn die Antriebskette aufgrund der Ein- oder Ausfederung insbesondere des Hinterrades eine veränderte Position annimmt.

Mit dem erfindungsgemäßen Kettenkasten können Bekleidungsstücke besser gegen eine Verschmutzung geschützt werden, wenn ein entsprechend ausgerüstetes Fahrrad benutzt wird.

Nach einer ersten Weiterbildung der Erfindung ist vorgesehen, dass ein erster Teilkörper des Kastenkörpers im Bereich des Rahmendreiecks mit dem Tretlager des Fahrrades am Fahrrad befestigbar ist. Dieses Rahmendreieck wird auch vorderes Rahmendreieck genannt, regelmäßig wird hier die Antriebskette um ein oder auch um ein aus mehreren Zahnräder ausgewähltes Zahnrad herumgelenkt. Der erste Teilkörper kann diesen Bereich der Antriebskette abdecken. Auch bei einer Ein- oder Ausfederung zum Beispiel des Hinterrades verändert sich die Anordnung der Antriebskette in diesem Bereich nicht wesentlich.

Nach einer nächsten Weiterbildung der Erfindung ist vorgesehen, dass ein zweiter Teilkörper des Kastenkörpers im Bereich der Schwinge für das Hinterrad am Fahrrad befestigbar ist. Die Schwinge ist ein Teil des Rahmens des Fahrrades, der bei einer Ein- oder Ausfederung des Hinterrades mitbewegt wird. Das Hinterrad wird in der Schwinge gehalten, regelmäßig ist die Schwinge über geeignete Feder- und Dämpferelemente gegenüber anderen Bauteilen des Fahrradrahmens abgestützt, dazu ist die Schwinge zudem regelmäßig schwenkbar an anderen Abschnitten des Fahrradrahmens angelenkt. Durch die Befestigungsmöglichkeit des zweiten Teilkörpers des Kastenkörpers vorzugsweise an dieser Schwinge wird dieser Teilkörper bei einer Bewegung der Schwinge mitbewegt. Diese Bewegung der Schwinge führt auch zu einer Verlagerung der Position der Antriebskette, da ja die Antriebskette zur Nabe des Hinterrades beziehungsweise von der Nabe des Hinterrades verlaufende Trumms aufweist.

Während dieser Bewegung des zweiten Teilkörpers wird der erste Teilkörper nicht mitbewegt. Dieser bleibt im Bereich des vorderen Rahmendreiecks angeordnet, die Ausrichtung der beiden Teilkörper des Kastenkörpers zueinander verändert sich. Weiterhin ist aber eine Abdeckung der Antriebskette des Fahrrades gegeben.

So sieht eine Weiterbildung der Erfindung vor, dass die Teilkörper am Fahrrad miteinander fluchtend anordbar sind.

Die Teilkörper sind vorzugsweise aus einem Kunststoff hergestellt, andere Materialien sind möglich.

Schließlich kann vorgesehen sein, dass die beiden Teilkörper des Kastenkörpers über wenigstens ein Scharnier miteinander verbunden sind. Möglich ist auch, dass beide Teilkörper über eine Sollbruchstelle miteinander verbunden sind. Bei diesen Bauformen liegen stets zwei Teilkörper des Kastenkörpers vor, sie sind jeweils einander angenähert, gleichwohl unabhängig voneinander bewegbar.

Hinsichtlich des Fahrrades, insbesondere eines zumindest hinterradgefederten Fahrrades, vorzugsweise eines vollgefederten Fahrrades, ist die Aufgabe erfindungsgemäß dadurch gelöst, dass das Fahrrad mit einem vorbeschriebenen Kettenkasten ausgerüstet ist.

Ein Ausführungsbeispiel des erfindungsgemäßen Kettenkastens sowie eines mit einem derartigen Kettenkasten ausgerüsteten Fahrrades ist in der Zeichnung dargestellt. Es zeigen:
- Figur 1:: eine schematische Seitenansicht eines Fahrrades und
- Figur 2 und 3:: maßstäblich vergrößerte Seitenansichten des Fahrrades gemäß Fig. 1.

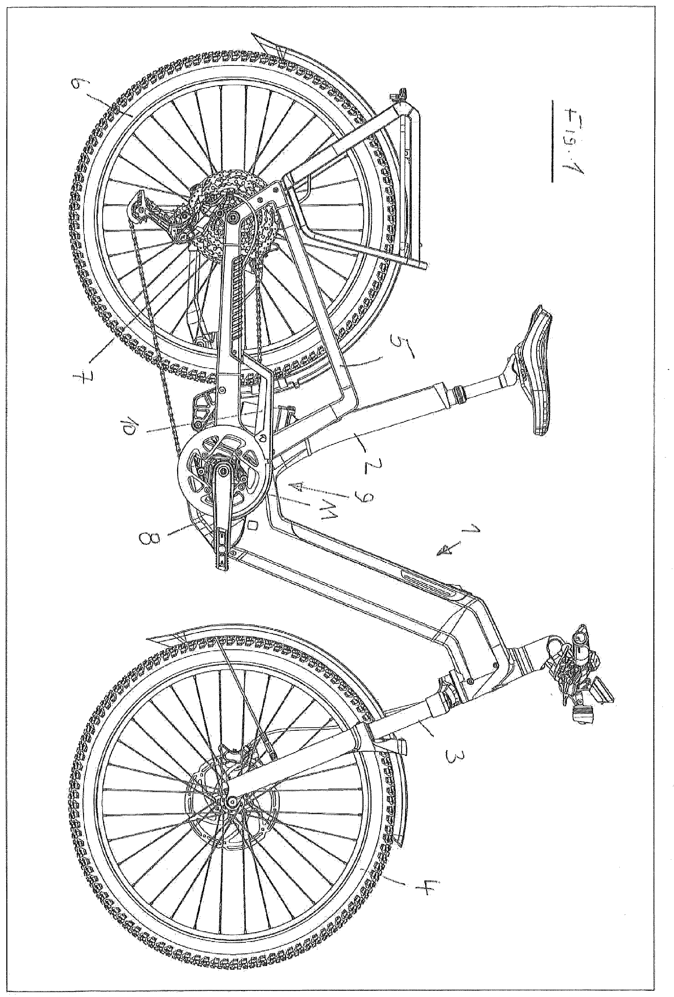

Das Fahrrad 1 in Figur 1 weist einen Fahrradrahmen 2, ein in einer Gabel 3 gehaltenes Vorderrad 4 und ein in einer Schwinge 5 gehaltenes Hinterrad 6 auf. Die Schwinge 5 ist am Fahrradrahmen 2 schwenkbar angelenkt. Auf die Nabe des Hinterrades 6 ist ein Ritzelpaket 7 mit mehreren Zahnrädern aufgebracht.

Eine von diesem Ritzelpaket 7 zu einem im Bereich des Tretlagers 8 angeordneten Zahnrad verlaufende Antriebskette ist wie das Zahnrad in der Zeichnung nicht dargestellt. Dieser Antriebskette ist ein Kettenkasten 9 zugeordnet, der einen aus den Teilkörpern 10 und 11 ausgebildeten Kastenkörper hat.

Zwischen den beiden Teilkörpern 10, 11 ist eine Trennung ausgebildet. Der erste Teilkörper 11 ist im Bereich des Tretlagers 8 am Rahmen 2 befestigt. Der zweite Teilkörper 10 ist dagegen an der Schwinge 5 befestigt.

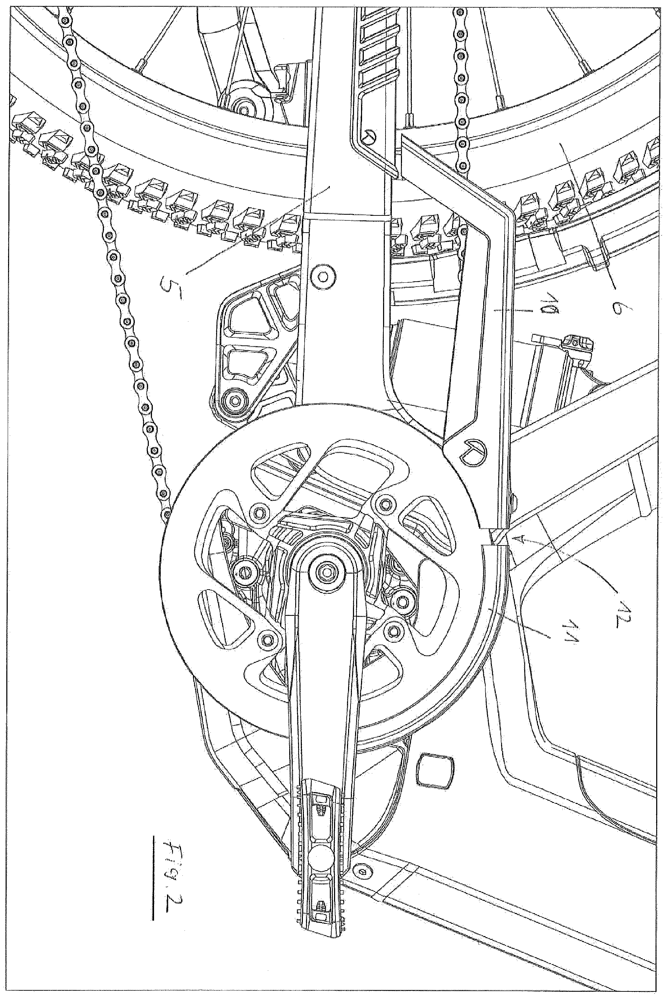

Figur 2 zeigt die Teilkörper 10, 11 in ihren Anordnungen im Bereich des Tretlagers 8 und an der Schwinge 5. Auch der zwischen den Teilkörpern 10, 11 ausgebildete Trennspalt 12 ist in Figur 2 erkennbar.

In Figur 2 befindet sich das Hinterrad 6 in einer normalen Federposition. Beide Teilkörper 10,11 sind zueinander fluchtend ausgerichtet.

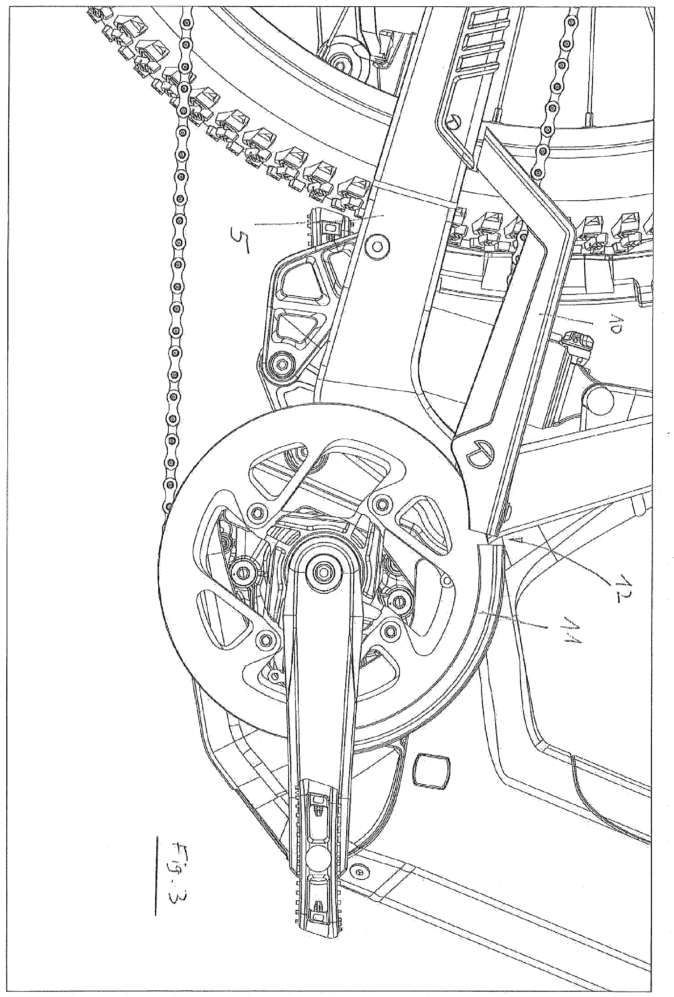

In Figur 3 tritt dagegen eine Einfederung des Hinterrades 6 ein. Die Schwinge 5 ist gegenüber ihrer Position in Figur 2 in einem Gelenk verschwenkt worden. Da der Teilkörper 10 an der Schwinge 5 angeordnet ist, wird er mit einem Verschwenken der Schwinge 5 mit verschwenkt. Er ist aus seiner gerade fluchtenden Anordnung nach Figur 2 heraus angehoben. Dabei folgt dieser Teilkörper 10 der gleichfalls angehobenen Antriebskette. Eine Zuordnung des Kettenkastens 9 insgesamt zur Antriebskette ist dadurch gewährleistet.

## Patentansprüche

1. Kettenkasten für ein Fahrrad, insbesondere für ein zumindest hinterradgefedertes Fahrrad, vorzugsweise für ein vollgefedertes Fahrrad, mit einem zumindest abschnittsweise dem Verlauf einer Antriebskette des Fahrrades folgenden Kastenkörper,
**dadurch gekennzeichnet,**
**dass** der Kastenkörper aus zumindest zwei Teilkörpern (10,11) ausgebildet ist, die voneinander unabhängig jeweils am Fahrrad (1) befestigbar sind.

2. Kettenkasten nach Anspruch 1, **dadurch gekennzeichnet, dass** ein erster Teilkörper (11) des Kastenkörpers im Bereich des Rahmendreiecks mit dem Tretlager des Fahrrades (1) am Fahrrad (1) befestigbar ist.

3. Kettenkasten nach Anspruch 1 oder 2, **dadurch gekennzeichnet, dass** ein zweiter Teilkörper (10) des Kastenkörpers im Bereich der Schwinge (5) für das Hinterrad (6) am Fahrrad (1) befestigbar ist.

4. Kettenkasten nach einem der vorhergehenden Ansprüche, **dadurch gekennzeichnet, dass** die Teilkörper (10,11) am Fahrrad (1) miteinander fluchtend anordbar sind.

5. Kettenkasten nach einem der vorhergehenden Ansprüche, **dadurch gekennzeichnet, dass** die Teilkörper (10,11) aus einem Kunststoff hergestellt sind.

6. Kettenkasten nach einem der vorhergehenden Ansprüche, **dadurch gekennzeichnet, dass** die Teilkörper (10,11) über wenigstens ein Scharnier miteinander verbunden sind.

7. Kettenkasten nach einem der Ansprüche 1 bis 5, **dadurch gekennzeichnet, dass** die Teilkörper (10,11) über eine Sollbruchstelle miteinander verbunden sind.

8. Fahrrad, insbesondere zumindest hinterradgefedertes Fahrrad, vorzugsweise vollgefedertes Fahrrad,
**dadurch gekennzeichnet,**
**dass** es mit einem Kettenkasten (9) nach einem der Ansprüche 1 bis 7 ausgerüstet ist.
